# EUROPEAN PATENT SPECIFICATION

(11) **EP 2 265 842 B1**
(45) Date of publication and mention of the grant of the patent: **07.05.2014**
(21) Application number: 09732708.4
(22) Date of filing: 08.04.2009
(51) Int. Cl.: F16G 13/04, F16G 13/18

(54) **A CHAIN**
KETTE
CHAINE

(30) Priority: 16.04.2008 US 45328
(43) Date of publication of application: 29.12.2010
(73) Proprietor: RENOLD Plc, Wythenshawe Manchester M22 5WL (GB)
(72) Inventor: GODFREY, Michael, Lakewood CO 80227 (US); PYPER, Torquil, Edmund, Meredith, Oxford OX1 5DU (GB); CHRISTMAS, Michael, Charles, Northwich CW8 1AP (GB); LODGE, Christopher, James, Derbyshire SK13 1LP (GB)
(74) Representative: Lambert, Thomas John
(86) International application number: PCT/GB2009/000919
(87) International publication number: WO 2009/127810

(56) References cited:
- EP-A- 0 494 670
- EP-A- 1 811 200
- CA-A1- 2 474 570
- DE-C1- 19 548 662
- DE-U1-202006 002 416
- FR-A- 1 254 947
- FR-A- 1 372 792
- US-A- 3 630 097
- US-A- 4 610 647
- US-A- 5 318 485
- US-A- 5 425 679
- US-A- 5 787 700
- US-A1- 2005 049 099

## Description

The present invention relates to a chain, such as a transmission chain, and more particularly, but not exclusively, to a pin oven chain.

Pin oven chains are used to convey metallic objects such as, for example, beverage cans, through an oven where they are heat-treated. In particular, the exterior surface of cans of this kind are printed and/or otherwise coated and the coating is then cured by the heat treatment process. The pin oven chain is often a conventional roller bush chain that has been modified such that certain pins of the chain are extended significantly on one side to form carrier pins that support the object. In the case of a beverage can, an open end of the can fits over the extended pin such that it is supported and can be conveyed through the oven.

Effective lubrication of a pin oven chain can be problematic. There are generally strict controls on the amount of lubricant that can be used so as to reduce the risk of contamination of the beverage cans. Moreover, in the environment of a high temperature oven lubricating oil suffers from coking and the resulting carbon deposits are often burnt on to the chain components. The presence and accumulation of such deposits restricts the passage of lubricant to the pin and bush interface thus causing chain wear and so pin oven chains have to be replaced regularly.

DE19548662 (Deschner, Heinrich, Dipl.-Ing) discloses a toothed washer mounted on a pin and disposed between link plates. The purpose of the toothed washer is to provide an uneven surface so that dirt accumulating on the washer does not form a continuous layer of dirt, but is instead broken up. This prevents a layer of dirt building up to an extent that it acts to resist the relative movement of the chain links - i.e. stiffening the chain.

FR1372792 (Link-Belt Compamy) discloses having a chain having inner and outer link plates that are spaced from each other by a side projection formed on an inner surface of the outer link plate. The purpose of the side projection is to space the link plates apart so as to allow the free flow of lubricant fluid to the pins of the chain.

It is an object of the present invention to obviate or mitigate at least one of the aforesaid disadvantages and/or to provide for an alternative or improved chain.

According to a first aspect of the present invention there is provided a chain having a longitudinal axis and comprising a plurality of interconnected chain link members, the link members being arranged along the longitudinal axis of the chain into inner link members that are flanked on each side by outer link members, the outer link members extending between adjacent inner link members, a pair of apertures defined in each of the link members and spaced apart in the direction of the axis, the inner link members having an outwardly facing surface with respect to the axis and the outer link members having an inwardly facing surface, the inner and outer link members being arranged such that one of the pair apertures in each of the outer and inner link members are in alignment and such that the outwardly facing surface of the inner link member and the inwardly facing surface of the outer link member partially overlap at an interface region in an area around the aligned apertures, the inner and outer link members being interconnected by transverse pins that are received in the aligned apertures, at least one wiper element provided at the interface region and defining a wiping edge that contacts, and is movable relative to, at least one of the surfaces in the interface region wherein the wiper element is defined by a separate wiper member disposed between inner and outer link members characterised in that the wiper member is a plate having first and second end edges that define first and second wiping edges respectively, and wherein the first and second end edges are each interrupted by a recess by which the plate is supported on adjacent said pins.

The wiper element serves to wipe clean at least one of the outwardly facing surface of the inner link member or the inwardly facing surface of the outer link member in the interface region so that it is clear of deposits, debris or sludge that may otherwise serve to prevent effective lubrication of the chain or to increase the tendency of the chain to wear. The chain is thus self-cleaning.

Preferably each recess is substantially semi-circular.

According to a second aspect of the invention there is provided a chain having a longitudinal axis and comprising a plurality of interconnected chain link members, the link members being arranged along the longitudinal axis of the chain into inner link members that are flanked on each side by outer link members, the outer link members extending between adjacent inner link members, a pair of apertures defined in each of the link members and spaced apart in the direction of the axis, the inner link members having an outwardly facing surface with respect to the axis and the outer link members having an inwardly facing surface, the inner and outer link members being arranged such that one of the pair apertures in each of the outer and inner link members are in alignment and such that the outwardly facing surface of the inner link member and the inwardly facing surface of the outer link member partially overlap at an interface region in an area around the aligned apertures, the inner and outer link members being interconnected by transverse pins that are received in the aligned apertures, at least one wiper element provided at the interface region and defining a wiping edge that contacts, and is movable relative to, at least one of the surfaces in the interface region, characterised in that the wiper element is defined by an elongate edge of a rib on one of the inner or outer link members, which extends in the interface region from one of the apertures in the inner or outer link member to a peripheral edge of that link member.

The inner link member may comprise at least one inner link plate. It may also comprise a pair of opposed inner link plates. The chain may further comprise bushes that are received in the apertures of the inner link plates and serve to join together the opposed inner link plates, the bushes being arranged so as to receive the transverse pins, the bushes being rotatable on said transverse pins so as to allow the inner link members to articulate relative to the outer link members, the outer link members being fixed so said pins. A roller may be rotatably disposed on each bush.

The outer link members may each be in the form of a plate.

Specific embodiments of the present invention will now be described, by way of example only, with reference to the accompanying drawings in which:
Figure 1 is a perspective view of an outer link of a roller bush chain in accordance with a first embodiment of the present invention;
Figure 2 is a perspective view of part of the first embodiment of a roller bush chain of the present invention fitted with outer links of figure 1;
Figure 3 is an end view of the roller bush chain of figure 1;
Figure 4 is a perspective view of a bush of a second embodiment of a roller bush chain of the present invention;
Figure 5 is a perspective view of an inner link of the second embodiment of a roller bush chain of the present invention;
Figure 6 is a perspective view of part the second embodiment of part of the roller bush chain;
Figure 7 is an end view of the second embodiment of the chain of figure 6,
Figure 8 is a perspective view of a cleaning link for a third embodiment of a roller bush chain in accordance with the present invention;
Figure 9 is a perspective view of part of a third embodiment of a roller bush chain in accordance with the present invention, fitted with the link of figure 8;
Figure 10 is a plan view of the chain of figure 9;
Figure 11 is a perspective view of part of a fourth embodiment of a roller bush chain in accordance with the present invention, with an outer link plate removed for clarity;

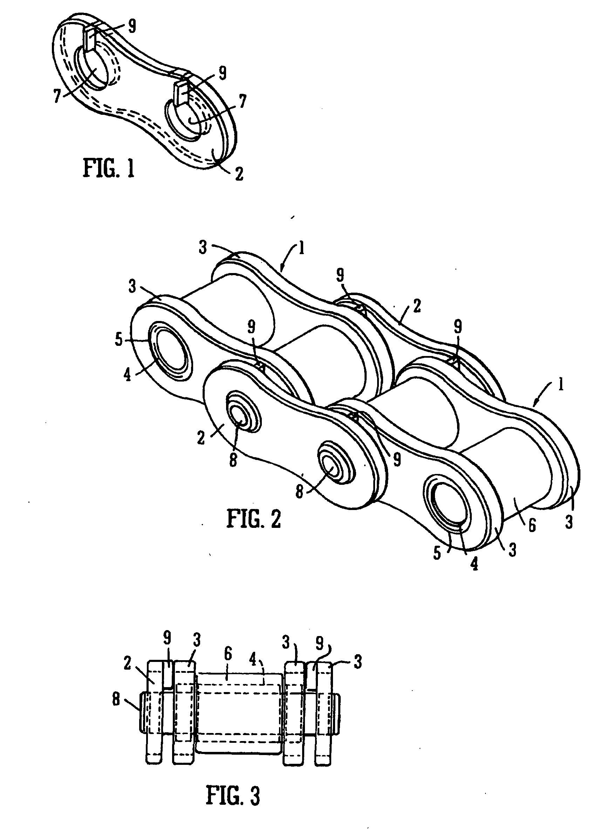

In all the embodiments shown in the figures the invention is shown as applied to a roller bush chain, although it is to be understood that it may have application to other types of transmission chain with inner and outer link members. In each of the exemplary embodiments the chain has a plurality of inner link assemblies 1 (only two are shown many of the figures, such as, for example, figures 2 and 3) arranged along the length of the chain so as to define a longitudinal chain axis and interconnected by alternate outer link plates 2 in such a manner that they can articulate relative to each other and the outer link plates. In practice such a chain would generally be configured into an endless loop and driven by a toothed sprocket, neither of which are shown in the figures.

Each inner link assembly 1 comprises a pair of opposed spaced inner link plates 3 connected together by a pair of bushes 4 extending perpendicularly to the plates. Each of the inner link plates 3 has a pair of spaced apertures 5 in which the ends of the pair of bushes 4 are received. Each of the opposed inner link plates 3 is mounted in a friction or interference fit on the ends of the bushes 4 in a fixed relationship and a rotatable cylindrical roller 6 is supported on each bush 4 between the inner link plates 3.

The outer link plates 2 are of similar configuration to the inner link plates 3 but with smaller apertures 7 and are arranged to connect together adjacent inner link assemblies 1. A given outer link plate 2 overlaps with adjacent inner link assemblies I such that each of its apertures 7 is aligned with a corresponding aperture 5 in the inner link assembly I and is connected to the inner link assemblies 1 by pins 8 that pass through the aligned apertures 5, 7 and are received in the bushes 4. The apertures 5 in the inner link assemblies 1 are sized such that the assemblies are free to rotate on the pins 8 but the outer link plates 2 are fixed to the pins 8. More specifically, the apertures 7 in the outer link plates 2 are sized such that the edge of the plate around them is an interference or friction fit with the pins 8.

In the embodiment of figures 1 to 3 the outer link plates 2 each have a pair of ribs 9 that extend inwardly towards the inner link plate 3. The ribs 9 each extend from a respective aperture 7 of the plate to the plate periphery in a generally radial direction with respect to the centre of the aperture. The ribs 9 may be formed integrally with the plate 2 as part of the manufacturing process e.g. by, for example, pressing, machining or material deposition or may be fixedly attached by welding, gluing or any other suitable fixing method. As a further alternative it may comprise a separate component that is releasably connected to the plate 2 by, for example, a clip or the like. In use the ribs 9 serve as a wipers whose elongate edges serve to wipe clean the outwardly facing surface of the inner link plates 3 in the region around the apertures 5 as the link plates 3 articulate relative to one another. This ensures that the region around the apertures 5 of the outwardly facing surface of the inner link plate 3 is substantially clear of any coke deposits, dirt or sludge that otherwise prevents oil getting to the bearing surfaces between each bush 4 and pin 9 and which may cause chain wear.

It will be appreciated that the wiper may take any suitable form and some examples are shown in the following embodiments. It may, for example, be achieved by adding or removing material from or to the inner or outer link plates at the appropriate region. For convenience and ease of understanding the components of the roller bush chains that are common to each embodiment (including that of figures 1 to 3) are labelled with the same reference numbers.

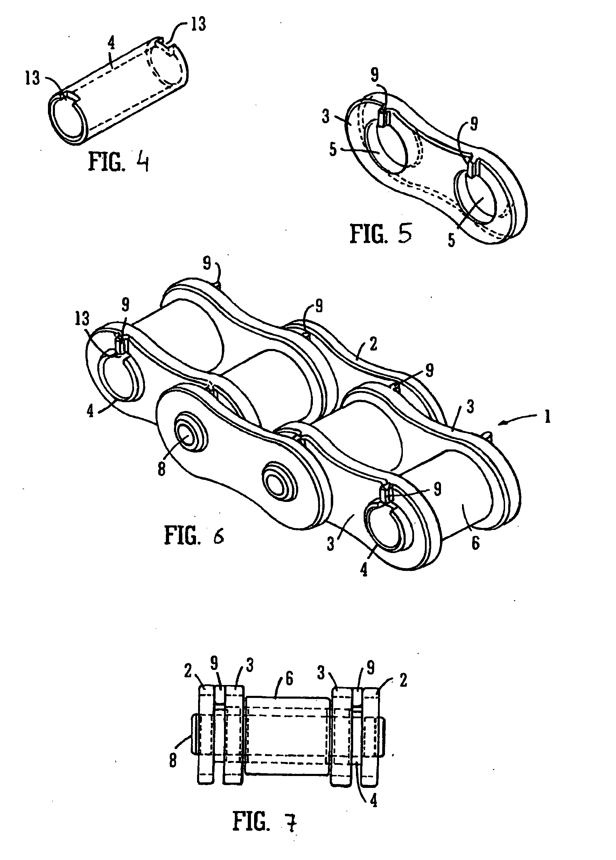

In the embodiment of figure 4 to 7 ribs 9 are formed on the outwardly facing surfaces of the inner link plates 3 above each aperture 5. The bushes 4 are of extended lengths compared to those of a conventional roller bush chain and each end of each bush 4 has a notch 13 cut out at the point immediately below the rib 9, the notch extending from the outside surface to the inside surface of the bush 4. In use, the edges of each rib 9 clean debris etc. from the inwardly facing surface of the outer link plate 2 and lubricant can be applied such that it passes through the notches 13 to the pins 8.

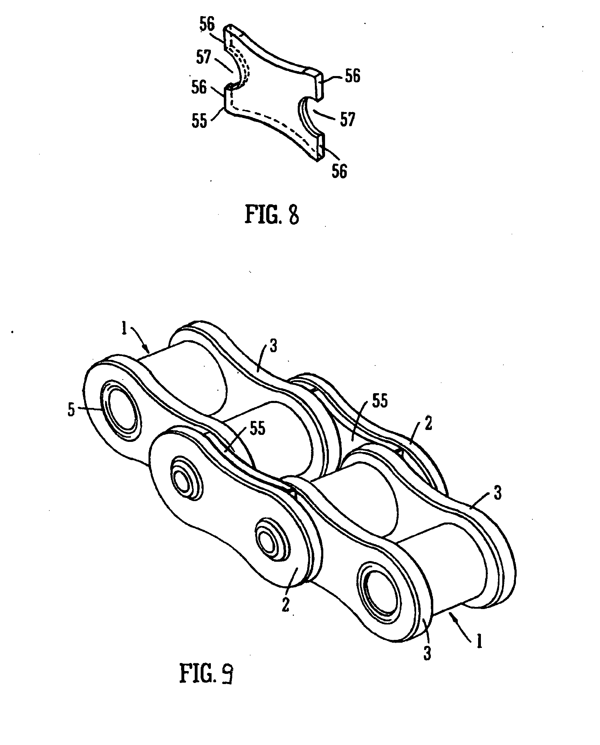

Figures 8 to 10 show an alternative wiper concept in which a modified plate 55 is disposed between the inner and outer link plates 3, 2 to serve as a cleaning plate. The modified plate 55 is essentially the same configuration as an outer link plate 2 but with its ends removed along a line that intersects the centre of the apertures 7 to leave substantially vertical edges 56 that serve, in use, as the wiper blades. At each of the modified plate 55 the vertical end edges 56 are interrupted by a substantially semi-circular recess 57 by which the plate is supported on the pins 8. These recesses 57 are effectively what remains of the pin apertures of the unmodified link plate. The modified link plate 55 underlies an outer link plate 2 and thus extends between adjacent inner link assemblies 1. In operation the vertical edges 56 serve to wipe clear the outwardly facing surfaces of the inner link plates 3 in the region around the apertures 5.

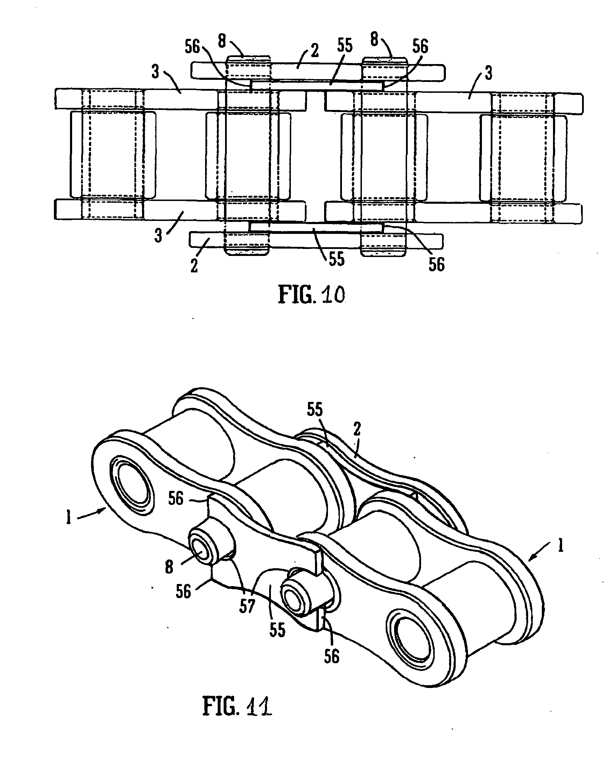

A modified version of the preceding embodiment is shown in figure 11 in which the recesses 57 are deeper in that they extend further into the plate 55. This allows affords a clearance between the edge of each recess 57 and the respective pin 8 so as to allow a limited degree of movement of the modified plate 55 relative to the pins 8 in a direction substantially parallel to the longitudinal axis of the chain. This axial movement increases the extent of the wiping action.

In other embodiments of the modified link plate (not shown) the plate may be formed from a generally rectangular blank so that the upper and lower edges are straight rather than waisted. The vertical depth of the plate may be such the upper and lower edges are positioned above or below the corresponding edges of the inner or outer link plates. The wiper edges of the modified link plate may be inclined to the vertical. The modified link plates may be disposed such that they extend over the inner link plate rather than the outer link plate.

The skilled person will appreciate that a chain according to the present invention could be fitted with one or more of any of the above cleaning arrangements in any appropriate combination.

Although the chains described in the exemplary embodiments herein are all roller bush chains it will be understood that the invention may be applied to other types of transmission chains that do not necessarily have rollers or bushes.

Whilst the particular problems relating to lubrication have been described in relation to a pin over chain. The same problems and disadvantages can apply to other chain applications and therefore the solution presented in this application is not limited to the particular chain type.

While the invention has been illustrated and described in detail in the drawings and foregoing description, the same is to be considered as illustrative and not restrictive in character, it being understood that only the preferred embodiments have been shown and described and that all changes and modifications that come within the scope of the inventions as defined in the claims are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A chain having a longitudinal axis and comprising a plurality of interconnected chain link members, the link members being arranged along the longitudinal axis of the chain into inner link members (1) that are flanked on each side by outer link members (2), the outer link members (2) extending between adjacent inner link members (1), a pair of apertures (5, 7) defined in each of the link members and spaced apart in the direction of the axis, the inner link members (1) having an outwardly facing surface with respect to the axis and the outer link members (2) having an inwardly facing surface, the inner and outer link members (1, 2) being arranged such that one of the pair apertures (7, 5) in each of the outer and inner link members (2, 1) are in alignment and such that the outwardly facing surface of the inner link member (1) and the inwardly facing surface of the outer link member (2) partially overlap at an interface region in an area around the aligned apertures (5, 7), the inner and outer link members (1, 2) being interconnected by transverse pins (8) that are received in the aligned apertures (5, 7), at least one wiper element (55) provided at the interface region and defining a wiping edge (56) that contacts, and is movable relative to, at least one of the surfaces in the interface region wherein the wiper element (55) is defined by a separate wiper member (55) disposed between inner and outer link members (1, 2), **characterised in that** the wiper member (55) is a plate having first and second end edges (56) that define first and second wiping edges respectively, and wherein the first and second end edges (56) are each interrupted by a recess (57) by which the plate is supported on adjacent said pins (8).

2. A chain according to claim 1 wherein each recess (57) is substantially semi-circular.

3. A chain having a longitudinal axis and comprising a plurality of interconnected chain link members, the link members being arranged along the longitudinal axis of the chain into inner link members (1) that are flanked on each side by outer link members (2), the outer link members (2) extending between adjacent inner link members (1), a pair of apertures (5, 7) defined in each of the link members and spaced apart in the direction of the axis, the inner link members (1) having an outwardly facing surface with respect to the axis and the outer link members (2) having an inwardly facing surface, the inner and outer link members (1, 2) being arranged such that one of the pair apertures (5, 7) in each of the outer and inner link members (2, 1) are in alignment and such that the outwardly facing surface of the inner link member (1) and the inwardly facing surface of the outer link member (2) partially overlap at an interface region in an area around the aligned apertures (5, 7), the inner and outer link members (1, 2) being interconnected by transverse pins (8) that are received in the aligned apertures (5, 7), at least one wiper element (9) provided at the interface region and defining a wiping edge that contacts, and is movable relative to, at least one of the surfaces in the interface region, **characterised in that** the wiper element (9) is defined by an elongate edge of a rib (9) on one of the inner or outer link members (1, 2), which extends in the interface region from one of the apertures (5, 7) in the inner or outer link member (1, 2) to a peripheral edge of that link member.

## Patentansprüche

1. Kette mit einer Längsachse und die aufweist: eine Vielzahl von miteinander verbundenen Kettengliedelementen, wobei die Gliedelemente entlang der Längsachse der Kette als innere Gliedelemente (1) angeordnet sind, die auf jeder Seite durch äußere Gliedelemente (2) flankiert werden, wobei sich die äußeren Gliedelemente (2) zwischen benachbarten inneren Gliedelementen (1) erstrecken; ein Paar Öffnungen (5, 7), die in jedem der Gliedelemente und beabstandet in der Richtung der Achse definiert werden, wobei die inneren Gliedelemente (1) eine nach außen liegende Fläche mit Bezugnahme auf die Achse und die äußeren Gliedelemente (2) eine nach innen liegende Fläche aufweisen, wobei die inneren und äußeren Gliedelemente (1, 2) so angeordnet sind, dass eine des Paares der Öffnungen (7, 5) in jedem der äußeren und inneren Gliedelemente (2, 1) in Ausrichtung ist, und so, dass sich die nach außen liegende Fläche des inneren Gliedelementes (1) und die nach innen liegende Fläche des äußeren Gliedelementes (2) teilweise in einem Grenzflächenbereich in einer Fläche um die ausgerichteten Öffnungen (5, 7) überdecken, wobei die inneren und äußeren Gliedelemente (1, 2) durch Querstifte (8) miteinander verbunden werden, die in den ausgerichteten Öffnungen (5, 7) aufgenommen werden; mindestens ein Abstreiferelement (55), das im Grenzflächenbereich vorhanden ist und eine Abstreifkante (56) definiert, die mindestens eine der Flächen im Grenzflächenbereich berührt und relativ dazu beweglich ist, wobei das Abstreiferelement (55) durch ein separates Abstreiferelement (55) definiert wird, das zwischen den inneren und äußeren Gliedelementen (1, 2) angeordnet ist, **dadurch gekennzeichnet, dass** das Abstreiferelement (55) eine Platte ist, die erste und zweite Endkanten (56) aufweist, die jeweils erste und zweite Abstreifkanten definieren, und wobei die ersten und zweiten Endkanten (56) jeweils durch eine Aussparung (57) unterbrochen werden, durch welche die Platte auf benachbarten Stiften (8) getragen wird.

2. Kette nach Anspruch 1, bei der eine jede Aussparung (57) im Wesentlichen halbkreisförmig ist.

3. Kette mit einer Längsachse und die aufweist: eine Vielzahl von miteinander verbundenen Kettengliedelementen, wobei die Gliedelemente entlang der Längsachse der Kette als innere Gliedelemente (1) angeordnet sind, die auf jeder Seite durch äußere Gliedelemente (2) flankiert werden, wobei sich die äußeren Gliedelemente (2) zwischen benachbarten inneren Gliedelementen (1) erstrecken; ein Paar Öffnungen (5, 7), die in jedem der Gliedelemente und beabstandet in der Richtung der Achse definiert werden, wobei die inneren Gliedelemente (1) eine nach außen liegende Fläche mit Bezugnahme auf die Achse und die äußeren Gliedelemente (2) eine nach innen liegende Fläche aufweisen, wobei die inneren und äußeren Gliedelemente (1, 2) so angeordnet sind, dass eine des Paares der Öffnungen (5, 7) in jedem der äußeren und inneren Gliedelemente (2, 1) in Ausrichtung ist, und so, dass sich die nach außen liegende Fläche des inneren Gliedelementes (1) und die nach innen liegende Fläche des äußeren Gliedelementes (2) teilweise in einem Grenzflächenbereich in einer Fläche um die ausgerichteten Öffnungen (5, 7) überdecken, wobei die inneren und äußeren Gliedelemente (1, 2) durch Querstifte (8) miteinander verbunden werden, die in den ausgerichteten Öffnungen (5, 7) aufgenommen werden; mindestens ein Abstreiferelement (9), das im Grenzflächenbereich vorhanden ist und eine Abstreifkante definiert, die mindestens eine der Flächen im Grenzflächenbereich berührt und relativ dazu beweglich ist, **dadurch gekennzeichnet, dass** das Abstreiferelement (9) durch eine längliche Kante einer Rippe (9) auf einem der inneren oder äußeren Gliedelemente (1, 2) definiert wird, die sich im Grenzflächenbereich von einer der Öffnungen (5, 7) im inneren oder äußeren Gliedelement (1, 2) zu einer peripheren Kante des Gliedelementes erstreckt.

## Revendications

1. Chaîne, comportant un axe longitudinal et comprenant plusieurs éléments de maillon de chaîne interconnectés, les éléments de maillon étant agencés le long de l'axe longitudinal de la chaîne sous forme d'éléments de maillon internes (1), flanqués de chaque côté par des éléments de maillon externes (2), les éléments de maillon externes (2) s'étendant entre des éléments de maillon internes adjacents (1), une paire d'ouvertures (5, 7), définies dans chacun des éléments de maillon et espacées dans la direction de l'axe, les éléments de maillon internes (1) comportant une surface orientée vers l'extérieur par rapport à l'axe, et les éléments de maillon externes (2) comportant une surface orientée vers l'intérieur, les éléments de maillon internes et externes (1, 2) étant agencés de sorte que l'une des ouvertures de la paire (7, 5) dans chacun des éléments de maillon externes et internes (2 , 1) est alignée et de sorte que la surface orientée vers l'extérieur de l'élément de maillon interne (1) et la surface orientée vers l'intérieur de l'élément de maillon externe (2) se chevauchent en partie au niveau d'une région d'interface dans une zone entourant les ouvertures alignées (5, 7), les éléments de maillon internes et externes (1, 2) étant interconnectés par des goupilles transversales (8) reçues dans les ouvertures alignées (5, 7), au moins un élément d'essuyage (55) agencé au niveau de la région d'interface et définissant un bord d'essuyage (56), contactant au moins une des surfaces de la région d'interface et pouvant être déplacé par rapport à celle-ci, dans laquelle l'élément d'essuyage (55) est défini par un élément d'essuyage séparé (55) agencé entre des éléments de maillon internes et externes (1, 2), **caractérisée en ce que** l'élément d'essuyage (55) est constitué par une plaque comportant des premier et deuxième bords d'extrémité (56) définissant respectivement des premier et deuxième bords d'essuyage, les premier et deuxième bords d'extrémité (56) étant chacun interrompus par un évidement (57) par lequel la plaque est supportée sur lesdites goupilles adjacentes (8).

2. Chaîne selon la revendication 1, dans laquelle chaque évidement (57) est pratiquement semi-circulaire.

3. Chaîne, comportant un axe longitudinal et comprenant plusieurs éléments de maillon de chaîne interconnectés, les éléments de maillon étant agencés le long de l'axe longitudinal de la chaîne sous forme d'éléments de maillon internes (1), flanqués de chaque côté par des éléments de maillon externes (2), les éléments de maillon externes (2) s'étendant entre des éléments de maillon internes adjacents (1), une paire d'ouvertures (5, 7) définies dans chacun des éléments de maillon et espacées dans la direction de l'axe, les éléments de maillon internes (1) comportant une surface orientée vers l'extérieur par rapport à l'axe, et les éléments de maillon externes (2) comportant une surface orientée vers l'intérieur, les éléments de maillon internes et externes (1, 2) étant agencés de sorte que l'une des ouvertures de la paire (5, 7) dans chacun des éléments de maillon externes et internes (2, 1) est alignée, et de sorte que la surface orientée vers l'extérieur de l'élément de maillon interne (1) et la surface orientée vers l'intérieur de l'élément de maillon externe (2) se chevauchent en partie au niveau d'une région d'interface dans une zone entourant les ouvertures alignées (5, 7), les éléments de maillon internes et externes (1, 2) étant interconnectés par des goupilles transversales (8) reçues dans les ouvertures alignées (5, 7), au moins un élément d'essuyage (9) agencé au niveau de la région d'interface et définissant un bord d'essuyage, contactant au moins une des surfaces dans la région d'interface et pouvant être déplacé par rapport à celle-ci, **caractérisée en ce que** l'élément d'essuyage (9) est défini par un bord allongé d'une nervure (9) sur l'un des éléments de maillon internes ou externes (1, 2), s'étendant dans la région d'interface à partir de l'une des ouvertures (5, 7) dans l'élément de maillon interne ou externe (1, 2) vers un bord périphérique de cet élément de maillon.
